# EUROPEAN PATENT SPECIFICATION

(11) **EP 2 386 127 B1**
(45) Date of publication and mention of the grant of the patent: **18.06.2014**
(21) Application number: 09837700.5
(22) Date of filing: 21.12.2009
(51) Int. Cl.: H01M 2/10, B60R 16/04

(54) **A METHOD FOR DUAL BATTERY PROVISION, A DUAL BATTERY DEVICE AND A VEHICLE**
VERFAHREN ZUR BEREITSTELLUNG EINER DOPPELBATTERIE, DOPPELBATTERIEVORRICHTUNG UND FAHRZEUG
PROCÉDÉ DE MISE À DISPOSITION DE DEUX BATTERIES, DISPOSITIF À DEUX BATTERIES ET VÉHICULE

(30) Priority: 08.01.2009 SE 0950002
(43) Date of publication of application: 16.11.2011
(73) Proprietor: Scania CV AB, 151 87 Södertälje (SE)
(72) Inventor: SMITH, Raymond, St Ives, Cambridgeshire PE17 4TU (GB); ÅKESON, Johan, S-640 61 Stallarholmen (SE); LEDFELT, Gunnar, S-155 91 Nykvarn (SE)
(86) International application number: PCT/SE2009/051476
(87) International publication number: WO 2010/080058

(56) References cited:
- DE-A1- 3 529 727
- DE-A1- 10 216 148
- FR-A1- 2 303 733
- GB-A- 2 015 951
- GB-A- 2 081 495
- JP-A- 2000 238 541
- US-A- 2 022 595
- US-A- 4 109 064
- US-A- 4 169 191
- US-A- 5 484 667
- US-A1- 2005 285 567

## Description

### TECHNICAL FIELD

The present invention relates to a method for dual battery provision, e.g. for trucks, according to the introductory portion of the attached claim 1. The present invention also relates to a dual battery device according to the introductory portion of the attached claim 6. The invention further relates to a vehicle according to the attached claim 13.

### PRIOR ART

Technique substantially of the kind described above is previously known.

DE3529727 describes for instance a system for protecting large accumulator cells (2) from being damaged. The system is especially intended for ships and against the risk of the accumulators sliding around when the ship is in an inclined position. A large number of accumulator cells are arranged in rows on a flat accommodating are (1) between fixed boundary walls (3), (4). A space is arranged between some of the accumulator cells intended for inflatable air cushions (10), (11). By expanding the air cushions between the accumulator cells, by means of a compressed-gas system (14), all the cells are pressed against the boundary walls of the flat accommodating area and are left in this braced state by means of wedges (9) which are subsequently inserted into the compensating joint, even after the air cushions have been emptied again via air-outlet valves (20), (21) and have been removed. The system according to D1 is intended for especially ships with many accumulator cells and for securing them all at one time! The problem solved is to keep the accumulators secured when the ship is moving or rolling. All the cells are located with the electrical connections directed upwards. The system needs inflatable air cushions, wedges and a compressed-gas system in order to be functional, which means that the system is very complex, heavy, hard to handle and expensive. The system according to this cited reference is not at all intended or usable for a vehicle like a truck.

JP2000238541 describes a mounting system for battery packs in a car. A reinforcement structure is arranged on the vehicle side portion, by securing an end portion of the battery pack on its outer side relative to the vehicle. Battery packs 25, 25 i.e. for driving an electric motor in the vehicle are installed on a battery housing floor 9 and secured in relation to each other by special brackets. The system is intended for battery packs with many battery cells and nothing in D3 shows that the battery cells are located with the electrical connections directed against each other, i.e. locating the batteries in a sideway position. There is no item that in an easy way may be mounted between the batteries in order to press them from each other.

Such known technologies are associated with various problems, the problems being associated with the demands appearing when a dual battery unit shall be provided in a compact, an easy to clamp and fix, an insulated and an easy to connect way.

An object of the present invention is to provide a solution to these problems to provide a dual battery unit, which is compact, makes it easy to clamp and fix the batteries of the unit and to electrically insulate and connect batteries of the unit.

### SUMMARY OF THE INVENTION

This and other objects are obtained by a method, a device and a vehicle as specified by the features of claims 1, 6 and 13, respectively. Further advantages are provided by what is specified in the corresponding dependent claims.

### BRIEF DESCRIPTION OF THE DRAWINGS

A better understanding of the present invention will be had upon reading the following detailed description in conjunction with the attached drawings, in which like details are designated with the same designations in the different views and in which
Fig. 1 schematically shows a perspective overview of a dual battery device according to a first embodiment according to the present invention, after application of a clamping device according to the present invention,
Fig. 2 schematically shows a clamping arrangement of the device according to fig.1, the two batteries, inter alia, being removed for clarity and the expansion of the clamping device being indicated,
Fig. 3 shows an enlarged perspective view of the clamping device according to said first embodiment,
Fig. 4 shows a clamping member according to e.g. fig. 3, seen against the surface to be applied against a battery and
Fig, 5 shows a block diagram over the main steps of the method according to the present invention.

### DETAILED DESCRIPTION OF PREFERRED EMBODIMENTS

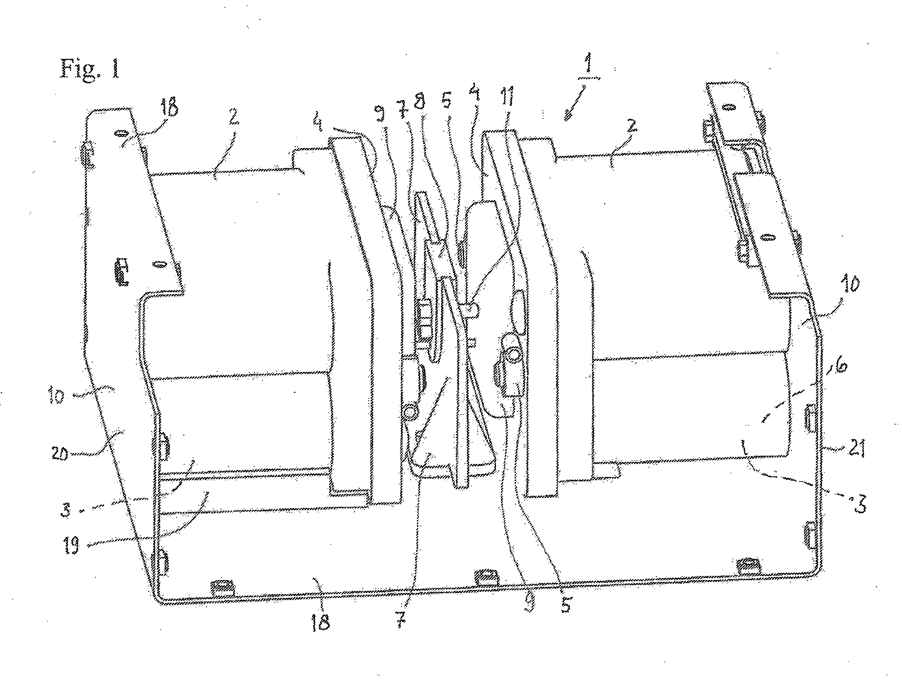

In fig. 1 a dual battery device is designated by 1, the device comprising two batteries 2, eg starting batteries for a vehicle, eg a truck, engine.

According to the present invention the batteries are provided lying on one of their sides 3 so that these sides are substantially horizontal in a device according to the present invention and the side 4, which is normally the upper side of the battery exposing the poles or terminals 5, is substantially vertical and the side 6, which is normally the battery bottom side, is also vertical, as shown in eg fig. 1.

According to preferred embodiments of the present invention the batteries are arranged with their terminals facing each other on opposing sides of a fixed insulating member 7, thus provided between the batteries.

Further, a clamping device 8, figs. 1,2 and 3, is provided, arranged to be applied onto the insulating member between the batteries 2. The clamping device is arranged to be expanded towards each battery by means of two clamping members 9, one against each battery, for forcing the batteries against opposing end stops 10 for clamping the batteries.

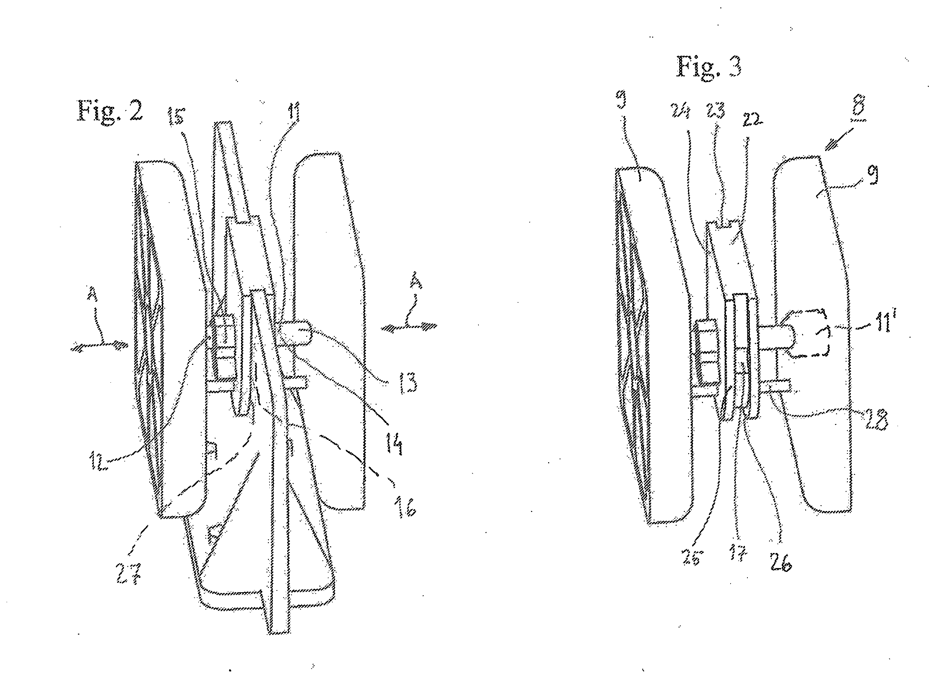

According to preferred embodiments, eg fig. 2, said clamping members are movable from and to each other for clamping and declamping by means of a screwing means 11 having oppositely threaded screw elements 12,13 for simultaneous movement of said clamping members in mutually opposite directions by simultaneous turning of the screw elements, each clamping member comprising a threaded bushing 11'. Also preferred is that the screw elements are part of a common axis element 14 arranged to be turned by means of eg a nut element 15 arranged on said axis element. Expansion and compression for clamping and declamping, respectively, are indicated by arrows A in fig. 2.

Further, according to preferred embodiments, the clamping device is arranged to be positioned and fastened to the insulating member by means of a snap coupling arrangement, the insulating member and the clamping device having snap portions 16,17, respectively, arranged to co-act in a snap coupling configuration.

Also preferred is that a common box housing 18 is provided for carrying said batteries on heat insulating material support means 19,shown only for the left battery in fig. 1.

Preferably, two opposing walls 20,21 of said box housing are arranged as end stops for the batteries in the clamping.

Further preferred is that the insulating member and the clamping members are made substantially of moulded plastic material for damping and low weight purposes.

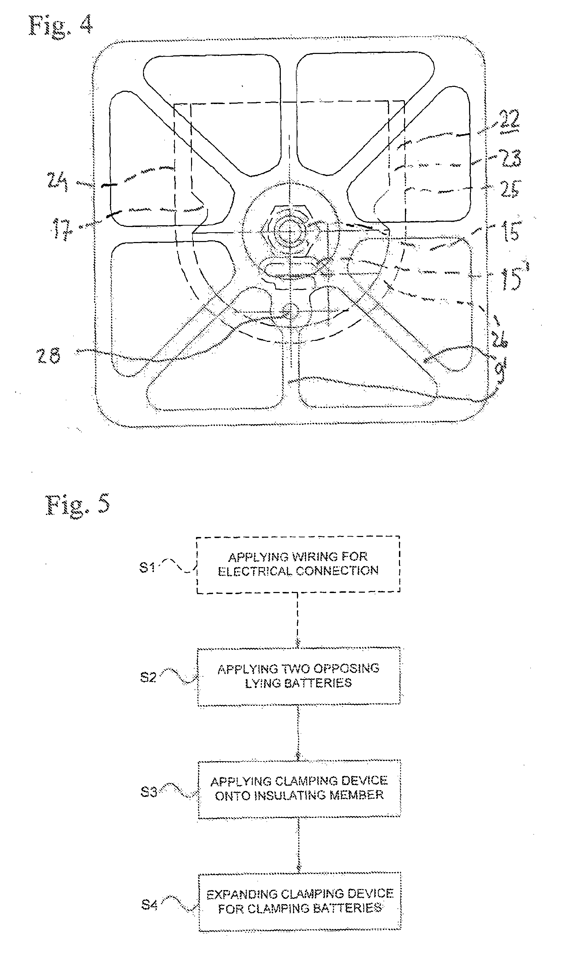

According to the embodiment shown, eg in figs. 3 and 4, the clamping device comprises a central fastening piece 22 carrying the axis comprising the screw elements and being arranged to co-act with the insulating member in said snap coupling arrangement. Thus, the fastening piece comprises a groove 23 running along the substantially vertical sides 24,25 of the fastening piece and the bottom side 26 of the fastening piece, into which groove the corresponding sides of a recess 27 in the insulating member is intended to fit when the clamping member is applied onto the insulating member, so that the clamping device is guided and positioned on the insulating member. According to the embodiment shown, the snap coupling configuration comprises opposing recesses 27 in the substantially vertical sides 24,25 of the fastening piece and corresponding opposing protrusions 16 of the insulating member, indicated in fig. 2.

In fig.4 a clamping member 9 is shown in more detail, the fastening piece 22 etc being shown behind the clamping member, the clamping member being shown as eg seen from the left of the left clamping member of fig. 2. According to the embodiment shown, the clamping member has a substantially rectangular configuration to, inter alia, fit in between two battery terminals and a substantially hollow configuration filled with a pattern of supporting ribs 9' to provide strength for the clamping member.

The method as well as the function of the dual battery device according to the present invention should to a considerable and sufficient extent have been made clear from the detailed description given above. The main steps S 1 - 4 of the method according to the present invention are given in fig. 5.

Thus, the two batteries of the dual battery device according to the present invention are provided lying on the side in a mutually opposite configuration, the respective terminals facing each other on opposing sides of the insulating member between the batteries to provide a compact arrangement, the insulating member insulating the terminals of the respective battery from each other. The insulating member is also a part of the clamping arrangement for the batteries, insofar that it provides support and holder for the clamping device when the clamping device is applied between the batteries and makes the clamping procedure easy to perform.

The configuration of the clamping device also makes the clamping operation easy and reliable, the clamping members being moved simultaneously towards the batteries in a clamping action or from the batteries in a declamping action simply by turning the axis carrying the oppositely threaded screw elements in one direction or the other, using the nut means carried by the axis.

The box housing protecting the batteries and the clamping arrangement at the same time acts as opposing end stops for the batteries in the clamping procedure, preferably by opposing walls, and by the central positioning of the clamping device, wiring for electrical connection etc may be performed prior to the clamping procedure, the central insulating member preventing short circuits from appearing.

Further, the configuration of the clamping members is preferably chosen so that the clamping members act against the batteries between the battery terminals, as can be seen in eg fig. 1.Furthermore, by means of a locking device 15', the nut element is prevented from turning, thereby securing the clamping of the batteries. Due to the preferred formation of the clamping arrangement substantially of moulded plastic a damping action with respect to vibrations etc as well as a low weight are obtained.

The clamping device also comprises an anti rotation shaft 28 arranged to fit in a the insulating member for securing the clamping device from rotation during and after clamping.

Further, due to the co-action between the insulating member and the clamping device mounting of the clamping device is extremely easy, also due to the low weight of the moulded plastic construction of the clamping device.

Above, the present invention has been described in association with examples and preferred embodiments.

Of course, further embodiments as well as minor amendments and additions may be imagined without departing from the basic inventive idea.

Thus, according to a preferred embodiment the dual battery device with the box housing is applied under a consumer battery box of a truck, the bottom of the dual battery device still not being the lowest point of the vehicle, e.g. truck, body due to the low height of the battery arrangement.

Further, embodiments of the method may be imagined in which wiring for electrical connection etc is applied after the clamping procedure. Also the batteries may be applied before or after applying the clamping device.

Furthermore, the clamping members 9 need not to be rectangular but may very well have another, e.g. circular, configuration.

Thus, the present invention should not be considered limited to the embodiments shown and discussed above but may be varied within the scope of the appended claims.

## Claims

1. A method for providing a dual battery unit, e.g. for starting batteries (2) for a vehicle, e.g. a truck, engine, including the steps of arranging two batteries (2) together and clamping the batteries (2) for fixing in a desired mutual position,
***characterized in** the further steps of,*
arranging the batteries (2) lying on one of their sides (3), the battery terminals (5) facing each other,
arranging an insulating member (7) between the batteries (2),
applying a clamping device (8) onto the insulating member (7) located between the batteries (2),
expanding the clamping device (8) towards each battery (2) by means of two clamping members (9), one against each battery (2), forcing the batteries (2) against opposing walls or end stops (10,20,21) of a carrier box housing (18), and
moving said clamping members (9) away from each other for expanding the clamping device (8) by means of screwing means (11) having oppositely threaded screw elements (12,13), one screw element (12,13) for each clamping member (9).

2. A method according to claim 1,
*comprising the further step of*
applying and fastening the clamping device (8) onto the insulating member (7) by means of a snap coupling arrangement (16,17).

3. A method according to claim 1 or 2,
*comprising the further step of*
supporting the batteries (2) on heat insulating material support means (19) in a carrier box housing (18).

4. A method according to anyone of claims 1 to 3,
*comprising the further step of*
using two opposing walls (20,21) of said box housing (18) as end stops for the batteries (2) in the clamping.

5. A method according to anyone of claims 1 to 4,
*comprising the further step of*
applying wiring for electrical connection (5) of the batteries (2) prior to clamping the batteries (2).

6. A dual battery device (1) comprising two batteries (2), e.g. starting batteries (2) for a vehicle , e.g. a truck, engine, comprising an arrangement for clamping the batteries (2) in a desired mutual position,
***characterized in that***
the batteries (2) are arranged to be lying on one of their sides (3), the battery terminals (5) of the respective battery (2) facing each other on opposite sides of an insulating member (7), a clamping device (8) being provided and arranged to be applied onto the insulating member (7) between the batteries (2), the clamping device (8) being arranged to be expanded towards each battery (2) by means of two clamping members (9), one against each battery (2), for forcing the batteries (2) against opposing walls or end stops (10,20,21) of a carrier box housing (18) for clamping the batteries (2), and said clamping members (9) are movable from and to each other for clamping and declamping, respectively, by means of a screwing means (11) having oppositely threaded screw elements (12,13) for simultaneous movement of said clamping members (9) in mutually opposite directions by simultaneous turning of the screw elements (12,13).

7. A dual battery device (1) according to claim 6,
***characterized in that***
the screw elements (12,13) are part of a common axis element arranged to be turned by means of a nut element (15) arranged on said axis element.

8. A dual battery device (1) according to claim 6 or 7,
***characterized in that***
the clamping device (8) is arranged to be positioned and fastened to the insulating member (7) by means of a snap coupling arrangement (16,17).

9. A dual battery device (1) according to claim 6 to 8,
***characterized in that***
a common box housing (18) is provided for carrying said batteries (2) on heat insulating material support means (19).

10. A dual battery device (1) according to claim 9,
***characterized in that***
two opposing walls (20,21) of said box housing (18) are arranged as end stops (10,20,21) for the batteries (2) in the clamping.

11. A dual battery device (1) according to claim 6 to 10,
***characterized in that***
the insulating member (7) and the clamping members (9) are made substantially of moulded plastic material.

12. A dual battery device (1) according to anyone of claims 6 to 11,
***characterized in that***
the clamping device (8) comprises a central fastening piece (22) carrying the axis comprising the screw elements (12,13) and being arranged to co-act with the insulating member (7) in a snap coupling arrangement.

13. A vehicle, eg a truck,
***characterized in that***
it comprises a dual battery device according to anyone of claims 6 to 12.

14. A vehicle according to claim 13,
***characterized in that***
the batteries (2) are starting batteries.

## Patentansprüche

1. Verfahren zum Bereitstellen einer Doppelbatterieeinheit, z.B. für Starterbatterien (2) für einen Motor eines Fahrzeugs, beispielsweise eines Lastkraftwagens, umfassend die Schritte des gemeinsamen Anordnens zweier Batterien (2) und Einspannen der Batterien (2), um sie an einer gewünschten gemeinsamen Stelle zu fixieren,
**gekennzeichnet durch** die weiteren Schritte:
Anordnen der Batterien (2) im Liegen auf einer ihrer Seiten (3), wobei die Batterieanschlüsse (5) einander zugewandt sind,
Anordnen eines Isolationsteils (7) zwischen den Batterien (2),
Anbringen einer Spannvorrichtung (8) an das zwischen den Batterien (2) befindliche Isolationsteil (7),
Erweitern der Spannvorrichtung (8) in Richtung jeder Batterie (2) mittels zweier Spannteile (9), von denen jeweils eines gegen eine der Batterien (2) drückt und
welches die Batterien (2) gegen einander gegenüberliegende Wände oder Endanschläge (10, 20, 21) eines Trägerkastengehäuses (18) drückt, und
Auseinanderbewegen der Spannteile (9), um die Spannvorrichtung (8) mittels eines Schraubmittels (11) zu erweitern, welches Schraubenteile (12, 13) mit entgegengesetzten Gewinden aufweist, wobei jeweils ein Schraubenteil (12, 13) pro Spannteil (9) vorgesehen ist.

2. Verfahren nach Anspruch 1, umfassend die weiteren Schritte:
Anbringen und Befestigen der Spannvorrichtung (8) an das Isolationsteil (7) mittels einer Rastkopplungsanordnung (16, 17).

3. Verfahren nach Anspruch 1 oder 2, umfassend die weiteren Schritte:
Stützen der Batterien (2) auf einem aus einem wärmeisolierenden Material hergestellten Trägermittel (19) in einem Trägerkastengehäuse (18).

4. Verfahren nach einem der Ansprüche 1 bis 3, umfassend die weiteren Schritte:
Verwenden zweier gegenüberliegender Wände (20, 21) des Kastengehäuses (18) als Endanschläge für die Batterien (2) beim Einspannen.

5. Verfahren nach einem der Ansprüche 1 bis 4, umfassend die weiteren Schritte:
Anbringen einer Leitung zum elektrischen Verbinden (5) der Batterien (2) vor dem Einspannen der Batterien (2).

6. Doppelbatterievorrichtung (1), umfassend zwei Batterien (2), zum Beispiel Starterbatterien (2) für einen Motor eines Fahrzeugs, beispielsweise eines Lastkraftwagens, umfassend eine Anordnung zum Einspannen der Batterien (2) an einer gewünschten gemeinsamen Stelle,
**dadurch gekennzeichnet, dass** die Batterien (2) derart angeordnet sind, dass sie auf einer ihrer Seiten (3) liegen, wobei die Batterieanschlüsse (5) der jeweiligen Batterien (2) auf entgegengesetzten Seiten eines Isolationsteils (7) einander zugewandt sind, wobei eine Spannvorrichtung (8) vorgesehen und eingerichtet ist, um an das Isolationsteil (7) zwischen den Batterien (2) angebracht zu werden,
wobei die Spannvorrichtung (8) eingerichtet ist, um in Richtung jeder Batterie (2) mittels zweier Spannteile (9) erweitert zu werden, von denen jeweils eines gegen eine der Batterien (2) drückt, um zum Einspannen der Batterien (2) die Batterien (2) gegen einander gegenüberliegende Wände oder Endanschläge (10, 20, 21) eines Trägerkastengehäuses (18) zu drücken, und wobei die Spannteile (9) zum Einspannen und Lösen mittels eines Schraubmittels (11) entsprechend von und zu einander beweglich sind, wobei das Schraubmittel (11) Schraubenteile (12, 13) mit zueinander entgegengesetzten Gewinden zur gleichzeitigen Bewegung der Spannteile (9) in zueinander entgegengesetzten Richtungen durch gleichzeitiges Drehen der Schraubenteile (12, 13) aufweist.

7. Doppelbatterievorrichtung (1) nach Anspruch 6,
**dadurch gekennzeichnet, dass** die Schraubenteile (12, 13) ein Teil eines gemeinsamen Achsteils sind, welches dazu eingerichtet ist, mittels eines auf dem Achsteil angeordneten Mutterteils (15) gedreht zu werden.

8. Doppelbatterievorrichtung (1) nach Anspruch 6 oder 7,
**dadurch gekennzeichnet, dass** die Spannvorrichtung (8) dazu eingerichtet ist, mittels einer Rastkopplungsanordnung (16, 17) an dem Isolationsteil (7) positioniert und befestigt zu werden.

9. Doppelbatterievorrichtung (1) nach einem der Ansprüche 6 bis 8,
**dadurch gekennzeichnet, dass** ein gemeinsames Kastengehäuse (18) zum Tragen der Batterien (2) auf einem aus einem wärmeisolierenden Material hergestellten Trägermittel (19) bereitgestellt ist.

10. Doppelbatterievorrichtung (1) nach Anspruch 9,
**dadurch gekennzeichnet, dass** zwei gegenüberliegende Wände (20, 21) des Kastengehäuses (18) als Endanschläge (10, 20, 21) für die Batterien (2) in der Spannvorrichtung eingerichtet sind.

11. Doppelbatterievorrichtung (1) nach einem der Ansprüche 6 bis 10,
**dadurch gekennzeichnet, dass** das Isolationsteil (7) und die Spannteile (9) im Wesentlichen aus einem geformten Kunststoffmaterial hergestellt sind.

12. Doppelbatterievorrichtung (1) nach einem der Ansprüche 6 bis 11,
**dadurch gekennzeichnet, dass** die Spannvorrichtung (8) ein mittiges Befestigungsstück (22) umfasst, welches die die Schraubenteile (12, 13) umfassende Achse trägt und dazu eingerichtet ist, mit dem Isolationsteil (7) in einer Rastkopplungsanordnung zusammen zu wirken.

13. Fahrzeug, zum Beispiel ein Lastkraftwagen,
**dadurch gekennzeichnet, dass** dieser eine Doppelbatterievorrichtung nach einem der Ansprüche 6 bis 12 umfasst.

14. Fahrzeug nach Anspruch 13,
**dadurch gekennzeichnet, dass** die Batterien (2) Starterbatterien sind.

## Revendications

1. Procédé pour préparer une unité de batterie double, par exemple pour les batteries de démarrage (2) pour un moteur de véhicule, par exemple de camion, comprenant les étapes consistant à rassembler deux batteries (7) et à serrer les batteries (2) pour les immobiliser dans une position relative désirée,
**caractérisé par** les étapes additionnelles consistant à :
disposer les batteries (2) couchées sur un de leurs côtés (3), les bornes (5) des batteries se faisant mutuellement face,
disposer un élément isolant (7) entre les batteries (2),
monter un dispositif de serrage (8) sur l'élément isolant (7) placé entre les batteries (2),
dilater le dispositif de serrage (8) en direction de chaque batterie (2) au moyen de deux éléments de serrage (9), un contre chaque batterie (2),
forcer les batteries (2) contre des parois ou butées d'extrémité opposées (10, 20, 21) d'un logement formant boîte de transport (18), et
écarter lesdits éléments de serrage (9) l'un de l'autre pour dilater le dispositif de serrage (8) à l'aide de moyens de vissage (11) qui comprennent des éléments à vis à pas opposés (12, 13), un élément à vis (12, 13) pour chaque élément de serrage (9).

2. Procédé selon la revendication1, **caractérisé par** l'étape additionnelle consistant à monter et fixer le dispositif de serrage (8) sur l'élément isolant (7) au moyen d'un dispositif d'accouplement à encliquetage (16, 17).

3. Procédé selon la revendication 1 ou 2, comprenant l'étape additionnelle consistant à donner appui aux batteries (2) sur des moyens supports en matière isolante thermique (19) dans un logement formant boîte de transport (18).

4. Procédé selon une quelconque des revendications 1 à 3, comprenant l'étape additionnelle consistant à utiliser deux parois opposées (20, 21) dudit logement formant boîte (18) comme butées d'extrémité pour les batteries (2) dans l'ensemble de serrage.

5. Procédé selon une quelconque des revendications 1 à 4, comprenant l'étape additionnelle consistant à mettre en place un câblage pour la connexion électrique (5) des batteries (2) avant de serrer les batteries (2).

6. Dispositif de batterie double (1) comprenant deux batteries (2), par exemple des batteries de démarrage (2) pour un moteur de véhicule, par exemple de camion, comprenant un dispositif servant à serrer les batteries (2) dans une position mutuelle désirée, **caractérisé en ce que** les batteries (2) sont disposées pour être couchées sur un de leurs côtés (3), les bornes de batterie (5) de chaque batterie respective (2) se faisant face sur les côtés opposés d'un élément isolant (7), un dispositif de serrage (8) étant disposé et arrangé pour être monté sur l'élément isolant (7) entre les batteries (2), le dispositif de serrage (8) étant arrangé pour être dilaté en direction de chaque batterie (2) au moyen de deux éléments de serrage (9), un contre chaque batterie (2), pour presser les batteries (2) à force contre des parois opposées ou des butées d'extrémités opposées (10, 20, 21) d'un logement formant boîte de transport (18) pour serrer les batteries (2), et lesdits éléments de serrage (9) pouvant être écartés et rapprochés l'un de l'autre, pour serrer et desserrer respectivement, à l'aide d'un moyen à vis (11) qui comprend des éléments à vis ayant des pas opposés (12, 13) destinés à entraîner un mouvement simultané desdits éléments de serrage (9) dans des directions mutuellement opposées sous l'effet d'une rotation simultanée des éléments à vis (12, 13).

7. Dispositif de batterie double (1) selon la revendication 6, **caractérisé en ce que** les éléments à vis (12, 13) font partie d'un élément axe commun agencé pour être tourné au moyen d'un élément écrou (15) monté sur ledit élément axe.

8. Dispositif de batterie double (1) selon la revendication 6 ou 7, **caractérisé en ce que** le dispositif de serrage (8) est arrangé pour être positionné et fixé à l'élément isolant (7) au moyen d'un dispositif d'accouplement à encliquetage (16, 17).

9. Dispositif de batterie double (1) selon la revendication 6 ou 8, **caractérisé en ce que** un logement formant boîte commune (18) est prévu pour transporter lesdites deux batteries (2) sur des moyens de support en matière isolante thermique (19).

10. Dispositif de batterie double (1) selon la revendication 9, **caractérisé en ce que** deux parois opposées (20, 21) dudit logement formant boîte (18) sont arrangées en qualité de butées d'extrémité (10, 20, 21) pour les batteries (2) contenues dans l'ensemble de serrage.

11. Dispositif de batterie double (1) selon la revendication 6 à 10, **caractérisé en ce que** l'élément isolant (7) et les éléments de serrage (9) sont essentiellement faits de matière plastique moulée.

12. Dispositif de batterie double (1) selon une quelconque des revendications 6 à 11, **caractérisé en ce que** le dispositif de serrage (8) comprend une pièce de fixation centrale (22) qui porte l'axe qui comprenant les éléments à vis (12, 13) et qui est agencée pour coopérer avec l'élément isolant (7) dans un dispositif d'accouplement à encliquetage.

13. Véhicule, par exemple, camion, **caractérisé en ce qu'**il comprend un dispositif de batterie double selon une quelconque des revendications 6 à 12.

14. Véhicule selon la revendication 13, **caractérisé en ce que** les batteries (2) sont des batteries de démarrage.
